# EUROPÄISCHE PATENTSCHRIFT

(11) **EP 1 730 391 B1**
(45) Veröffentlichungstag und Bekanntmachung des Hinweises auf die Patenterteilung: **14.10.2009**
(21) Anmeldenummer: 05707947.7
(22) Anmeldetag: 04.02.2005
(51) Int. Cl.: F02D 41/02, F02D 41/14

(54) **VERFAHREN UND VORRICHTUNG ZUM STEUERN EINER BRENNKRAFTMASCHINE**
METHOD AND DEVICE FOR CONTROLLING AN INTERNAL COMBUSTION ENGINE
PROCEDE ET DISPOSITIF DE COMMANDE D'UN MOTEUR A COMBUSTION INTERNE

(30) Priorität: 31.03.2004 DE 102004015836
(43) Veröffentlichungstag der Anmeldung: 13.12.2006
(73) Patentinhaber: Continental Automotive GmbH, 30165 Hannover (DE)
(72) Erfinder: RÖSEL, Gerd, 93055 Regensburg (DE); ZHANG, Hong, 93105 Tegernheim (DE)
(86) Internationale Anmeldenummer: PCT/EP2005/050492
(87) Internationale Veröffentlichungsnummer: WO 2005/095777

(56) Entgegenhaltungen:
- DE-A1- 4 322 341
- DE-A1- 10 028 570
- DE-A1- 10 103 772
- US-B1- 6 253 542

## Beschreibung

Die Erfindung betrifft ein Verfahren und eine Vorrichtung zum Steuern einer Brennkraftmaschine mit einem Ansaugtrakt und einem Abgastrakt, der einen Dreiwege-Katalysator umfasst, und mit mindestens einem Zylinder, der mit dem Ansaugtrakt abhängig von der Stellung eines Gaseinlassventils kommuniziert und der mit dem Abgastrakt abhängig von der Stellung eines Gasauslassventils kommuniziert. Ferner ist dem mindestens einen Zylinder ein Einspritzventil zugeordnet, das Kraftstoff zumisst. Eine Sauerstoffsonde ist stromabwärts des Dreiwege-Katalysators in dem Abgastrakt angeordnet.

Immer strengere gesetzliche Vorschriften machen es bei Brennkraftmaschinen zum einen erforderlich, die Rohemissionen, hervorgerufen durch die Verbrennung des Luft/Kraftstoff-Gemisches in dem jeweiligen Zylinder, so stark wie möglich zu senken. Zum anderen sind in Brennkraftmaschinen Abgasnachbehandlungssysteme im Einsatz, die Schadstoffemissionen, die während des Verbrennungsprozesses des Luft/Kraftstoff-Gemisches in dem Zylinder erzeugt werden, in unschädliche Stoffe umwandeln. Insbesondere bei Ottomotoren wird hierzu ein Dreiwege-Katalysator eingesetzt, der sich in dem Abgastrakt der Brennkraftmaschine befindet. Ein hoher Wirkungsgrad bei der Umwandlung der Schadstoffkomponenten Kohlenmonoxid, Kohlenwasserstoffe und Stickoxide ist nur in einem engen Fenster zwischen dem stöchiometrischen Luft/Kraftstoff-Verhältnis und in etwa 6 Promille in Richtung eines Kraftstoffüberschusses gewährleistet. Zum Ausgleichen von tatsächlichen Schwankungen des Luft/Kraftstoff-Verhältnisses in dem jeweiligen Zylinder sind Dreiwege-Katalysatoren mit einer Schicht aus einem Material beschichtet, welches kurzzeitig Sauerstoff speichern kann und diesen nach Bedarf bindet oder abgibt. Eine derartige Schicht wird auch als Washcoat bezeichnet und besteht beispielsweise aus Ce₂O₃ (Di-Cerium-tri-Oxid). Durch diese Washcoat-Schicht werden so Schwankungen des Luft/Kraftstoff-Gemisches und des entsprechenden Abgases in dem Katalysator kompensiert, solange die Washcoat-Schicht noch nicht ihre maximale Menge an Sauerstoff gebunden hat oder im anderen Fall kein Sauerstoff mehr in der Washcoat-Schicht gebunden ist. Werden diese Grenzen jedoch überschritten, so sinkt der Wirkungsgrad des Dreiwege-Katalysators sehr stark ab und es kommt zu erhöhten Schadstoffemissionen der Brennkraftmaschine.

Es ist bekannt, mittels des Messsignals einer Sauerstoffsonde, die stromabwärts des Dreiwege-Katalysators angeordnet ist, im Falle einer Lambdaregelung mit einer Sauerstoffsonde, die stromaufwärts des Dreiwege-Katalysators angeordnet ist, und ein binäres Messsignal erzeugt, einen P- oder I-Anteil der Regelungsparameter oder eine Verzögerungszeit des Lambdareglers entsprechend abhängig von dem Messsignal der Sauerstoffsonde stromabwärts des Dreiwege-Katalysators anzupassen. Dies wird auch als Trimm-Regelung bezeichnet. Es hat sich jedoch gezeigt, dass trotz dieser Maßnahme, insbesondere bei alternden Dreiwege-Katalysatoren weiterhin unerwünscht hohe Schadstoffemissionen der Brennkraftmaschine auftreten können.

Aus der DE 101 03 772 A1 ist ein Verfahren zum Betreiben eines Dreiwege-Katalysators bekannt, der eine Sauerstoff speichernde Komponente enthält, die einen minimalen und einen maximalen Füllungsgrad für Sauerstoff aufweist. Der Dreiwege-Katalysator ist in einem Abgastrakt eines Verbrennungsmotors angeordnet. Das dem Motor zugeführte Luft/Kraftstoff-Gemisch wird so geregelt, dass der Füllgrad der Sauerstoff speichernden Komponente des Katalysators in einem mittleren Sollbereich zwischen dem minimalen und dem maximalen Füllgrad gehalten wird. Ein Auswandern des Füllgrades aus dem Sollbereich wird dadurch überprüft, dass der Füllgrad ausgehend von dem momentanen Ausgangswert durch kurzzeitiges Abmagern oder Anfetten des dem Motor zugeführten Luft/Kraftstoff-Gemisches um einen Betrag erhöht oder erniedrigt und zugleich wieder auf den Ausgangswert durch eine kurzzeitige gegenläufige Änderung der Luft/Kraftstoff-Gemisches zurückgeführt wird. Im Falle eines Durchbruchs von magerem oder fettem Abgas durch den Katalysator während der Prüfphase erfolgt ein kurzzeitiges Anfetten oder auch Abmagern in Form eines Korrektursprungs des dem Motor zugeführten Luft/Kraftstoff-Gemisches.

Aus der US 6,253,542 B1 ist eine Regelung eines Luft/Kraftstoff-Gemisches in einer Brennkraftmaschine bekannt, die einen Nach-Katalysator-Abgassensor umfasst. Wenn das Messsignal des Nach-Katalysator-Abgassensors außerhalb eines vorgegebenen akzeptablen Bereichs ist, wird ein Proportionalparameter der Regelung abhängig von dem Messsignal eingestellt.

Auch aus der DE 100 28 570 A1 und der DE 43 22 341 A1 sind Verfahren zum Einstellen eines Luft/Kraftstoff-Verhältnisses bei einer Brennkraftmaschine bekannt, die jeweils Sauerstoffsonden aufweist, die stromabwärts eines Katalysators angeordnet sind.

Die Aufgabe der Erfindung ist es, ein Verfahren und eine Vorrichtung zum Steuern einer Brennkraftmaschine zu schaffen, die über eine lange Betriebsdauer der Brennkraftmaschine auf einfache Weise geringe Schadstoffemissionen gewährleisten.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich bezüglich eines ersten Aspekts aus durch ein Verfahren und eine entsprechende Vorrichtung zum Steuern einer Brennkraftmaschine, bei dem eine zuzuführende Kraftstoffmasse ermittelt wird, die dem jeweiligen Zylinder zugeführt werden soll, abhängig von einer Lastgröße. Die Lastgröße kann beispielsweise ein in den jeweiligen Zylinder strömender Luftmassenstrom sein, sie kann jedoch genauso gut eine beliebige andere Lastgröße sein, wie z.B. ein von der Brennkraftmaschine zu erzeugendes Drehmoment, das beispielsweise unter anderem abhängig von der Stellung eines Fahrpedals ermittelt wird.

Eine einmalig zuzumessende Zusatzkraftstoffmasse wird ermittelt, wenn das Messsignal einer Nachkat-Sauerstoffsonde, die stromabwärts eines Dreiwege-Katalysators in einem Abgastrakt der Brennkraftmaschine angeordnet ist, charakteristisch ist für mindestens einen vorgegebenen Restsauerstoffanteil. Die Zusatzkraftstoffmasse wird in diesem Fall abhängig von dem Verlauf des Messsignals der Nachkat-Sauerstoffsonde ermittelt. Eine korrigierte zuzuführende Kraftstoffmasse wird ermittelt abhängig von der zuzuführenden Kraftstoffmasse und gegebenenfalls der einmalig zuzumessenden Kraftstoffmasse. Ein Stellsignal zum Steuern des Einspritzventils wird erzeugt abhängig von der korrigierten zuzuführenden Kraftstoffmasse. Die Erfindung nutzt die Erkenntnis, dass dann wenn das Messsignal der Nachkat-Sauerstoffsonde charakteristisch ist für mindestens einen vorgegebenen Restsauerstoffanteil der Dreiwege-Katalysator im wesentlichen keinen zusätzlichen Sauerstoff mehr speichern kann und so ein Betrieb der Brennkraftmaschine in diesem Zustand auch bei gegebenenfalls einem Vorhandensein einer bekannten Trimm-Regelung sehr häufig immer wieder ein sogenanntes Durchbrechen des Messsignals der Nachkat-Sauerstoffsonde mit damit verbundenen Schadstoffemissionen, insbesondere NOX-Emissionen der Brennkraftmaschine auftritt.

Durch das Zumessen der einmalig zuzumessenden Kraftstoffmasse wird der Dreiwege-Katalysator in einen Zustand gebracht, in dem dann eine entsprechend vorgebbare Reserve zum Aufnehmen oder Speichern von Sauerstoff vorhanden ist und somit entsprechende Schwankungen des Luft/Kraftstoff-Verhältnisses in Zylindern sehr gut durch den Dreiwege-Katalysator ausgeglichen werden können und schnell eine deutliche Verringerung von Schadstoffemissionen gewährleistet ist.

Die einmalig zuzumessende Kraftstoffmasse wird abhängig von einem Gradienten des Messsignals der Nachkat-Sauerstoffsonde ermittelt. Der Gradient ist ein sehr guter Indikator für den Zustand des Dreiwege-Katalysators und somit, ob es sich um einen leichten oder starken Sauerstoffüberlauf handelt. Auf diese Weise kann der nach dem Zumessen der einmalig zuzumessenden Kraftstoffmasse verbleibende gespeicherte Sauerstoff in dem Dreiwege-Katalysator sehr präzise eingestellt werden.

Die einmalig zuzumessende Kraftstoffmasse kann alternativ oder zusätzlich abhängig von einem minimalen Messwert des Messsignals ermittelt werden, während das Messsignal der Nachkat-Sauerstoffsonde charakteristisch ist für mindestens einen vorgegebenen Restsauerstoffanteil. Der minimale Messwert ist ein sehr guter Indikator für den Zustand des Dreiwege-Katalysators und somit, ob es sich um einen leichten oder starken Sauerstoffüberlauf handelt. Auf diese Weise kann der nach dem Zumessen der einmalig zuzumessenden Kraftstoffmasse verbleibende gespeicherte Sauerstoff in dem Dreiwege-Katalysator sehr präzise eingestellt werden.

Besonders einfach kann in diesem Zusammenhang die einmalige zuzumessende Kraftstoffmasse ermittelt werden, wenn das Messsignal der Nachkat-Sauerstoffsonde einen vorgegebenen ersten Schwellenwert unterschreitet. Der vorgegebene erste Schwellenwert ist dabei geeignet vorgegeben.

Gemäß einer vorteilhaften Ausgestaltung der Erfindung ist die einmalig zuzumessende Kraftstoffmasse derart vorgegeben, dass in etwa 50 % des in dem Dreiwege-Katalysator speicherbaren Sauerstoffs nach dem Zumessen der einmalig zuzumessenden Kraftstoffmasse verbleibt. Auf diese Weise ist nach dem Zumessen der einmalig zuzumessenden Kraftstoffmasse eine maximale Schwankungsbreite des Luft/Kraftstoff-Verhältnisses in dem jeweiligen Zylinder möglich ohne einen Anstieg der Schadstoffemissionen stromabwärts des Dreiwege-Katalysators.

Gemäß einer weiteren vorteilhaften Ausgestaltung der Erfindung wird die einmalig zuzumessende Kraftstoffmasse von einem Schätzwert der aktuellen Sauerstoff-Speicherkapazität mittels eines physikalischen Modells des Dreiwege-Katalysators ermittelt. Auf diese Weise kann der nach dem Zumessen der einmalig zuzumessenden Kraftstoffmasse verbleibende gespeicherte Sauerstoff in dem Dreiwege-Katalysator sehr präzise eingestellt werden.

Gemäß eines zweiten Aspekts zeichnet sich die Erfindung aus durch ein Verfahren und eine entsprechende Vorrichtung, bei dem/der eine zuzuführende Kraftstoffmasse in den Zylinder abhängig von einer von der Lastgröße ermittelt wird, und eine einmalig verringerte Kraftstoffmasse ermittelt wird, wenn das Messsignal der Nachkat-Sauerstoffsonde charakteristisch ist für mindestens einen vorgegebenen Restkraftstoffanteil und zwar abhängig von dem Verlauf des Messsignals.

Eine korrigierte zuzuführende Kraftstoffmasse wird ermittelt abhängig von der zuzuführenden Kraftstoffmasse gegebenenfalls abzüglich der einmalig verringerten Kraftstoffmasse. Ein Stellsignal zum Steuern des Einspritzventils wird erzeugt abhängig von der korrigierten zuzuführenden Kraftstoffmasse. Dabei wird die Erkenntnis genutzt, dass dann wenn das Messsignal der Nachkat-Sauerstoffsonde charakteristisch ist für mindestens einen vorgegebenen Restkraftstoffanteil der Dreiwege-Katalysator im wesentlichen keinen Sauerstoff mehr gespeichert hat und so ein Betrieb der Brennkraftmaschine in diesem Zustand auch bei gegebenenfalls einem Vorhandensein einer bekannten Trimm-Regelung sehr häufig immer wieder ein sogenanntes Durchbrechen des Messsignals der Nachkat-Sauerstoffsonde mit damit verbundenen Schadstoffemissionen, insbesondere CO und HC-Emissionen der Brennkraftmaschine auftritt.

Durch die einmalig verringerte Kraftstoffmasse kann bei geeigneter Wahl dieser ein entsprechender, bezogen auf das stöchiometrische Luft/Kraftstoff-Verhältnis, Sauerstoffüberschuss erzeugt werden, der dann zu einer entsprechenden Einlagerung von Sauerstoff in dem Dreiwege-Katalysator führt. Anschließend ist in dem Dreiwege-Katalysator dann eine entsprechend vorgebbare Reserve zum Aufnehmen oder Speichern von Sauerstoff vorhanden. Somit können entsprechende Schwankungen des Luft/Kraftstoff-Verhältnisses in Zylindern sehr gut durch den Dreiwege-Katalysator ausgeglichen werden und es ist schnell eine deutliche Verringerung von Schadstoffemissionen gewährleistet.

Die einmalig verringerte Kraftstoffmasse wird abhängig von dem Gradienten des Messsignals der Nachkat-Sauerstoffsonde ermittelt.

Die einmalig verringerte Kraftstoffmasse kann zusätzlich oder alternativ abhängig von einem maximalen Wert des Messsignals ermittelt werden während das Messsignal der Nachkat-Sauerstoffsonde charakteristisch ist für mindestens einen vorgegebenen Restkraftstoffanteil.

In einer vorteilhaften Ausgestaltung des zweiten Aspekts der Erfindung wird die einmalig verringerte Kraftstoffmasse ermittelt, wenn das Messsignal der Nachkat-Sauerstoffsonde einen vorgegebenen zweiten Schwellenwert überschreitet. Dies ist besonders einfach.

Gemäß einer weiteren vorteilhaften Ausgestaltung dieses Aspekts der Erfindung ist die einmalig verringerte Kraftstoffmasse derart vorgegeben, dass in etwa 50 % des in dem Dreiwege-Katalysator speicherbaren Sauerstoffs gespeichert ist, nachdem Kraftstoffmasse entsprechend um die verringerte Kraftstoffmasse verringert zugemessen wurde.

Gemäß einer weiteren vorteilhaften Ausgestaltung des zweiten Aspekts der Erfindung wird der Schätzwert der aktuellen Sauerstoff-Speicherkapazität des Dreiwege-Katalysators ermittelt.

Ausführungsbeispiele der Erfindung sind im Folgenden anhand der schematischen Zeichnungen erläutert. Es zeigen:
- Figur 1: eine Brennkraftmaschine mit einer Steuereinrichtung,
- Figur 2: ein Blockschaltbild der Steuereinrichtung,
- Figur 3: ein Ablaufdiagramm eines ersten Teils eines Programms zum Steuern der Brennkraftmaschine, und
- Figur 4: einen zweiten Teil des Programms zum Steuern der Brennkraftmaschine.

Elemente gleicher Konstruktion oder Funktion sind figuren-übergreifend mit den gleichen Bezugszeichen gekennzeichnet.

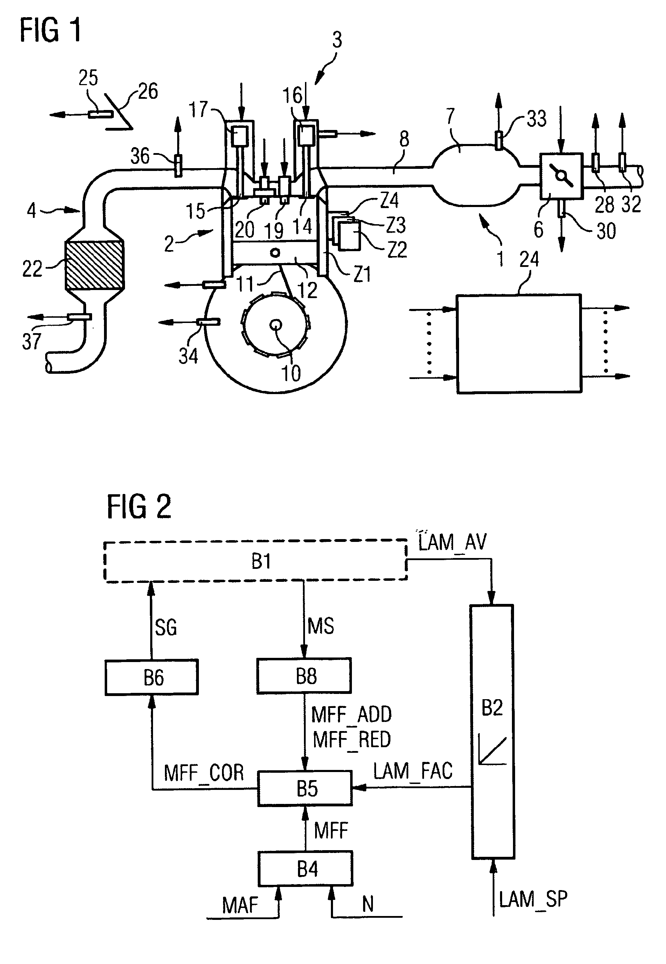

Eine Brennkraftmaschine (Figur 1) umfasst einen Ansaugtrakt 1, einen Motorblock 2, einen Zylinderkopf 3 und einen Abgastrakt 4. Der Ansaugtrakt 4 umfasst vorzugsweise eine Drosselklappe 6, ferner einen Sammler 7 und ein Saugrohr 8, das hin zu einem Zylinder Z1 über einen Einlasskanal in den Motorblock 2 geführt ist. Der Motorblock 2 umfasst ferner eine Kurbelwelle 10, welche über eine Pleuelstange 11 mit dem Kolben 12 des Zylinders Z1 gekoppelt ist.

Der Zylinderkopf 3 umfasst einen Ventiltrieb mit einem Gaseinlassventil 14, einem Gasauslassventil 15 und Ventilantriebe 16, 17. Der Zylinderkopf 3 umfasst ferner ein Einspritzventil 19 und eine Zündkerze 20. Alternativ kann das Einspritzventil 19 auch in dem Saugrohr 8 angeordnet sein.

Der Abgastrakt 4 umfasst einen Katalysator 22, der als Dreiwege-Katalysator ausgebildet ist.

Eine Steuereinrichtung 24 ist vorgesehen, der Sensoren zugeordnet sind, die verschiedene Messgrößen erfassen und jeweils den Messwert der Messgröße ermitteln. Die Steuereinrichtung 24 ermittelt abhängig von mindestens einer der Messgrößen Stellgrößen, die dann in ein oder mehrere Stellsignale zum Steuern der Stellglieder mittels entsprechender Stellantriebe umgesetzt werden.

Die Sensoren sind ein Pedalstellungsgeber 25, welcher eine Stellung eines Fahrpedals 26 erfasst, ein Luftmassenmesser 28, welcher einen Luftmassenstrom stromaufwärts der Drosselklappe 6 erfasst, ein Temperatursensor 32, welcher die Ansauglufttemperatur erfasst, ein Kurbelwellenwinkelsensor 34, welcher einen Kurbelwellenwinkel erfasst, dem dann eine Drehzahl N zugeordnet wird, eine Nachkat-Sauerstoffsonde 37, welche stromabwärts des Dreiwege-Katalysators 22 angeordnet ist und welche einen Restsauerstoffgehalt des Abgases stromabwärts des Dreiwege-Katalysators 22 erfasst. Abhängig von dem Restsauerstoffgehalt wird ein Messsignal MS, das bevorzugt ein Spannungssignal ist, an die Steuereinrichtung abgegeben. Ferner ist eine Vorkat-Sauerstoffsonde 36 vorgesehen, deren Messsignal charakteristisch ist für das Luft/KraftstoffVerhältnis in dem Zylinder Z1. Je nach Ausführungsform der Erfindung kann eine beliebige Untermenge der genannten Sensoren vorhanden sein oder es können auch zusätzliche Sensoren vorhanden sein.

Die Stellglieder sind beispielsweise die Drosselklappe 6, die Gaseinlass- und Gasauslassventile 14, 15, das Einspritzventil 19 oder die Zündkerze 20.

Neben dem Zylinder Z1 sind bevorzugt auch noch weitere Zylinder Z2 bis Z4 vorgesehen, denen dann auch entsprechende Stellglieder zugeordnet sind.

Ein Blockschaltbild der Steuereinrichtung 24, die auch als Vorrichtung zum Steuern der Brennkraftmaschine bezeichnet werden kann, ist anhand der Figur 2 dargestellt. In dem Blockschaltbild sind die im Zusammenhang mit der Erfindung relevanten Blöcke der Steuereinrichtung 24 dargestellt.

Ein gestrichelt dargestellter Block B1 entspricht der Brennkraftmaschine gemäß Figur 1. Aus dem Messsignal der Vorkat-Sauerstoffsonde 36 wird ein Ist-Luft/Kraftstoff-Verhältnis LAM_AV in dem Zylinder Z1 - Z4 abgeleitet und einem Block B2 zugeleitet. Die Vorkat-Sauerstoffsonde 36 ist bevorzugt als lineare Lambdasonde ausgebildet, sie kann jedoch auch als einfache binäre Lambdasonde ausgebildet sein, deren Messsignal einen Magerwert hat, wenn das Luft/Kraftstoff-Verhältnis in dem Zylinder Z1 - Z4 größer ist als ein stöchiometrisches Luft/Kraftstoff-Verhältnis und deren Messsignal einen Fettwert hat, wenn das Luft/Kraftstoff-Verhältnis in dem Zylinder Z1 - Z4 kleiner ist als das stöchiometrische Luft/KraftstoffVerhältnis. Dem Block B2 wird ferner ein Soll-Luft/Kraftstoff-Verhältnis LAM_SP, das in dem Zylinder Z1 - Z4 eingestellt werden soll, zugeführt. Bevorzugt hat das Soll-Luft/Kraftstoff-Verhältnis LAM_SP annähernd den Wert des stöchiometrischen Luft/Kraftstoff-Verhältnisses. Es kann jedoch auch, insbesondere im Falle einer linearen Lambdasonde mit einer Zwangsanregung versehen sein und so zyklisch um den Stöchiometriewert schwanken.

Die Differenz des Soll- und des Ist-Luft/Kraftstoff-Verhältnisses LAM_SP, LAM_AV wird einem Regler, der in dem Block B2 ausgebildet ist, zugeführt. Der Regler hat einen Integral-Regelparameter und einen Proportionalregelparameter und ist als ein dem Fachmann bekannter Lambdaregler ausgebildet. Die Stellgröße des Reglers in dem Block B2 ist ein Lambdaregelfaktor LAM_FAC.

In einem Block B4 wird abhängig von einer Lastgröße, die bevorzugt eine Luftmasse MAF in dem jeweiligen Zylinder Z1 - Z4 der Brennkraftmaschine und eine Drehzahl N der Kurbelwelle sind, eine zuzumessende Kraftstoffmasse MFF ermittelt. Die Luftmasse MAF in dem jeweiligen Zylinder Z1 - Z4 wird bevorzugt mittels eines physikalischen Modells abhängig von der Drosselklappenstellung, die von dem Drosselklappenstellungssensor 30 ermittelt wird, der Drehzahl N und gegebenenfalls weiteren Größen wie beispielsweise dem Saugrohrdruck oder dem erfassten Luftmassenstrom stromaufwärts der Drosselklappe ermittelt.

Alternativ kann die Lastgröße jedoch auch eine andere Größe, wie beispielsweise ein von der Brennkraftmaschine abzugebendes Drehmoment sein, das bevorzugt abhängig von der Fahrpedalstellung und gegebenenfalls weiteren Größen ermittelt wird.

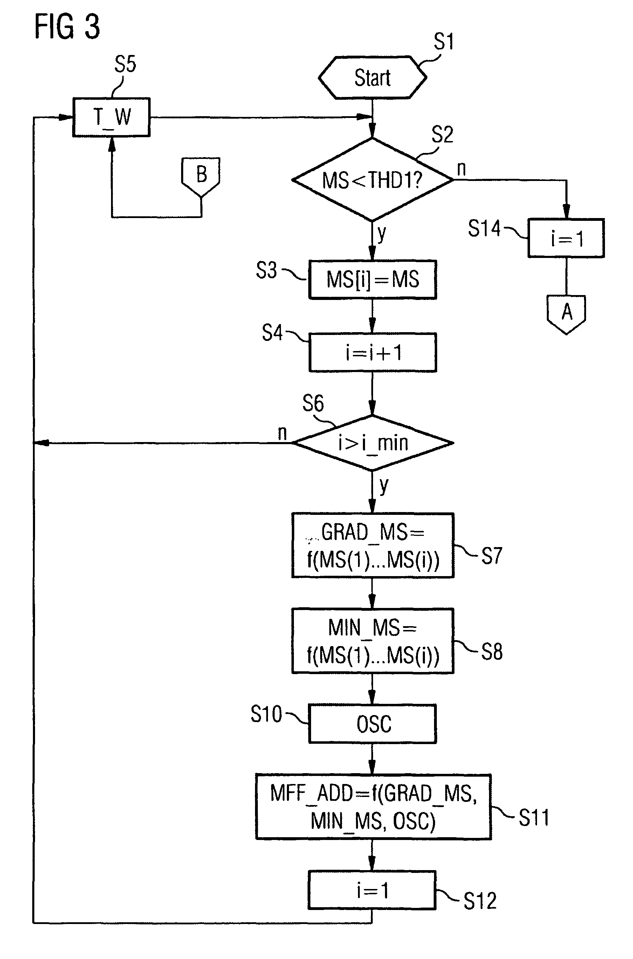

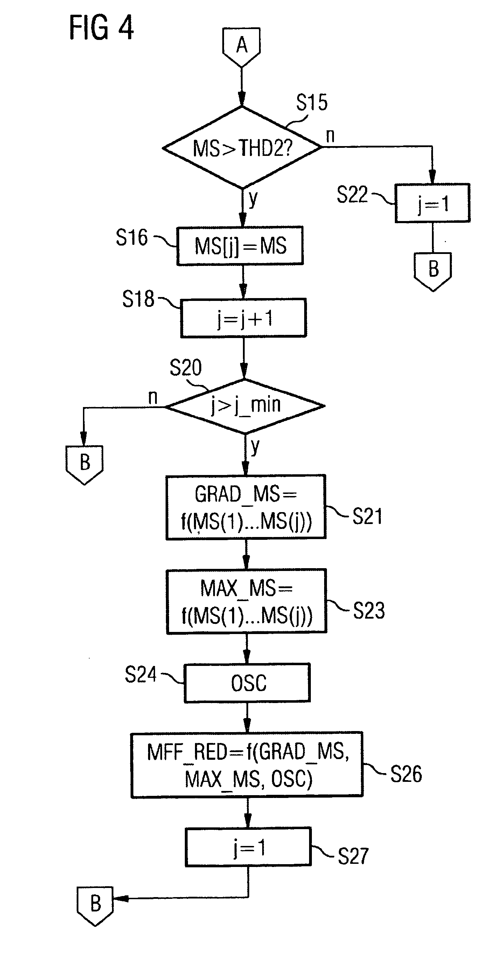

Ferner ist ein Block B8 vorgesehen, dem das Messsignal MS der Nachkat-Sauerstoffsonde 37 zugeführt wird. In dem Block B8 wird abhängig von dem Messsignal MS der Nachkat-Sauerstoffsonde 37 gegebenenfalls eine einmalig zuzumessende Kraftstoffmasse MFF_ADD oder eine einmalig verringerte Kraftstoffmasse MFF_RED ermittelt. Dazu wird in dem Block B8 ein Programm abgearbeitet, das weiter unten anhand der Figuren 3 und 4 näher erläutert ist.

Eine korrigierte zuzumessende Kraftstoffmasse MFF_COR wird in einem Block B5 mittels eine korrigierte zuzuführende Kraftstoffmasse MFF_COR ermittelt durch Multiplikation des Lambdaregelfaktors LAM_FAC mit der Summe oder der Differenz der zuzumessenden Kraftstoffmasse und der einmalig zuzumessenden Kraftstoffmasse bzw. der einmalig verringerten Kraftstoffmasse MFF_RED ermittelt. Alternativ kann in dem Block B5 auch das Produkt der zuzumessenden Kraftstoffmasse MFF und des Lambdaregelfaktors LAM_FAC addiert werden zu der einmalig zuzumessenden Kraftstoffmasse bzw. der einmalig verringerten Kraftstoffmasse MFF_RED.

In einem Block B6 wird dann abhängig von der korrigierten zuzumessenden Kraftstoffmasse MFF_COR ein Stellsignal SG für das oder die Einspritzventile 19 erzeugt und die Einspritzventile 19 entsprechend angesteuert.

Das Programm, das in dem Block B8 abgearbeitet wird, wird in einem Schritt S1, bevorzugt zeitnah zum Start der Brennkraftmaschine, gestartet. In dem Schritt S1 werden bevorzugt Variablen initialisiert, wie beispielsweise ein Zähler i oder ein weiterer Zähler j. Die Zähler i, j werden bevorzugt mit dem Wert 1 belegt.

In einem Schritt S2 wird geprüft, ob der aktuelle Wert des Messsignals MS kleiner ist als ein vorgegebener erster Schwellenwert THD1. Der erste Schwellenwert THD1 ist geeignet so gewählt, dass er charakteristisch ist für mindestens einen vorgegebenen Restsauerstoffanteil des Abgases im Bereich der Nachkat-Sauerstoffsonde 37. Als Nachkat-Sauerstoffsonde ist bevorzugt eine binäre Lambdasonde im Einsatz, deren Messsignal bevorzugt ein Spannungssignal ist. Der erste Schwellenwert beträgt dann beispielsweise in etwa 550 mV.

Ist die Bedingung des Schrittes S2 erfüllt, so wird der aktuelle Wert des Messsignals MS der Nachkat-Sauerstoffsonde 37 an einer durch den Wert des Zählers i bestimmten Speicherplatz für das Messsignal MS zwischengespeichert. Anschließend wird in einem Schritt S4 der Zähler i inkrementiert, bevorzugt um 1.

In einem Schritt S6 wird geprüft, ob der Zähler i einen Wert größer als ein minimaler Zählerwert i_min des Zählers i hat. Der minimale Zählerwert i_min kann beispielsweise zwei betragen. Ist die Bedingung des Schrittes S6 nicht erfüllt, so verharrt das Programm in einem Schritt S5 für eine vorgegebene Wartezeitdauer T_W, bevor die Bedingung des Schrittes S2 erneut geprüft wird.

Ist die Bedingung des Schrittes S6 erfüllt, so wird in einem Schritt S7 ein Gradient GRAD_MS des Messsignals MS der Nachkat-Sauerstoffsonde 37 abhängig von den zwischengespeicherten Werten des Messsignals MS ermittelt. Unter dem Gradienten GRAD_MS wird in diesem Zusammenhang die zeitliche Änderung, d.h. die zeitliche Ableitung des Messsignals MS verstanden. Der Gradient GRAD_MS kann auf unterschiedliche Weise ermittelt werden, so z.B. kann der Gradient den zeitlichen Abfall des Messsignals MS direkt nach Unterschreiten des ersten Schwellenwerts THD1 bezeichnen und somit charakteristisch sein für die Geschwindigkeit, mit der sich das Messsignal MS verringert. Er kann jedoch auch entsprechend ermittelt werden, dass er charakteristisch ist für die Geschwindigkeit eines Anstiegs des Wertes des Messsignals hin zu dem ersten Schwellenwert THD1.

In einem anschließenden Schritt S8 wird ein minimaler Wert MIN_MS des Messsignals MS der Nachkat-Sauerstoffsonde 37 abhängig von den zwischengespeicherten Werten des Messsignals MS der Nachkat-Sauerstoffsonde 37 ermittelt.

Anschließend wird in einem Schritt S10 bevorzugt ein Schätzwert OSC der aktuellen Sauerstoff-Speicherkapazität des Dreiwege-Katalysators 22 ermittelt. Alternativ kann der Schätzwert OSC der aktuellen Sauerstoff-Speicherkapazität des Dreiwege-Katalysators 22 auch von einem anderen Programm, das in der Steuereinrichtung 24 abgearbeitet wird, zu gegebenenfalls anderen Zeitpunkten ermittelt werden und in dem Schritt S10 lediglich eingelesen werden. Der Schätzwert OSC der Sauerstoff-Speicherkapazität des Dreiwege-Katalysators 22 wird bevorzugt mittels eines physikalischen Modells ermittelt. Gegebenenfalls erfolgt zu diesem Zweck, insbesondere im Falle einer linearen Lambdasonde als Vorkat-Sauerstoffsonde, eine Zwangsanregung mit einer erhöhten Amplitude, um so die aktuelle Sauerstoff-Speicherkapazität des Dreiwege-Katalysators 22 zu überprüfen und zu ermitteln.

In einem anschließenden Schritt S11 wird dann die einmalig zuzumessende Kraftstoffmasse MFF_ADD abhängig von dem Gradienten GRAD_MS des Messsignals MS der Nachkat-Sauerstoffsonde 37 und/oder dem minimalen Wert MIN MS des Messsignals MS der Nachkat-Sauerstoffsonde 37 sowie - eventuell dem Schätzwert OSC der aktuellen Sauerstoff-Speicherkapazität des Dreiwege-Katalysators 22 ermittelt. Dies erfolgt bevorzugt wahlweise mittels eines oder mehrerer Kennfelder, die vorab durch Versuche oder auch Simulationen ermittelt wurden.

Bevorzugt wird so die zusätzlich zuzumessende Kraftstoffmasse MFF_ADD derart ermittelt, dass nach dem Zumessen der einmalig zuzumessenden Kraftstoffmasse MFF_ADD der in dem Dreiwege-Katalysator 22 gespeicherte Sauerstoff in etwa 50 % des maximal in dem Dreiwege-Katalysators 22 aktuell speicherbaren Sauerstoffs beträgt.

In einem anschließenden Schritt S12 wird der Zähler i wieder mit dem Wert 1 initialisiert und anschließend die Bearbeitung in dem Schritt S5 fortgesetzt.

Ist die Bedingung des Schrittes S2 nicht erfüllt, d.h. der aktuelle Wert des Messsignals MS ist nicht kleiner als der vorgegebene erste Schwellenwert THD1, so wird in einem Schritt S14 der Zähler i wieder mit dem Wert 1 initialisiert.

Im Anschluss an den Schritt S14 wird die Bearbeitung in einem Schritt S15 fortgesetzt, in dem geprüft wird, ob das aktuelle Messsignal MS größer ist als ein vorgegebener zweiter Schwellenwert THD2. Der zweite Schwellenwert THD2 ist geeignet so vorgegeben, dass bei Überschreiten des Messsignals MS der Nachkat-Sauerstoffsonde 37 des zweiten Schwellenwertes THD2 das Messsignal MS charakteristisch ist für mindestens einen vorgegebenen Restkraftstoffanteil des Abgases stromabwärts des Dreiwege-Katalysators 22.
Ist die Bedingung des Schrittes S15 nicht erfüllt, so wird in einem Schritt S22 der Zähler j initialisiert, bevorzugt mit eins. Anschließend wird die Bearbeitung in dem Schritt S5 fortgesetzt.

Ist die Bedingung des Schrittes S15 erfüllt, so wird in einem Schritt S16 der aktuelle Wert des Messsignals MS der Nachkat-Sauerstoffsonde 37 in einem durch den Zähler j bestimmten Speicherplatz für das Messsignal MS zwischengespeichert. In einem Schritt S18 wird dann der Zähler j um den Wert inkrementiert, bevorzugt um den Wert 1.

In einem Schritt S20 wird geprüft, ob der Zähler j größer ist als ein minimaler Zählerwert j_min für den Zähler j, der zum Beispiel zwei beträgt. Ist dies nicht der Fall, so wird die Bearbeitung in dem Schritt S5 fortgesetzt.

Ist die Bedingung des Schrittes S20 hingegen erfüllt, so wird in einem Schritt S21 entsprechend dem Schritt S7 der Gradient GRAD_MS des Messsignals MS ermittelt. Dabei kann es hier insbesondere vorteilhaft sein, die Geschwindigkeit des Anstiegs des Messsignals MS nach Überschreiten des zweiten Schwellenwerts THD2 zu ermitteln.

Anschließend wird in einem Schritt S23 der maximale Wert MAX_MS des Messsignals MS der Nachkat-Sauerstoffsonde 37 entsprechend dem Vorgehen des Schrittes S8 ermittelt.

Anschließend wird in einem Schritt S24 ein Schätzwert OSC der aktuellen Sauerstoff-Speicherkapazität des Dreiwege-Katalysators 22 entsprechend dem Schritt S10 ermittelt. Anschließend wird in einem Schritt S26 eine einmalig verringerte Kraftstoffmasse MFF_RED abhängig von dem Gradienten GRAD_MS des Messsignals MS der Nachkat-Sauerstoffsonde 37 und/oder dem maximalen Wert MAX_MS des Messsignals MS sowie eventuell dem Schätzwert OSC der aktuellen Sauerstoff-Speicherkapazität des Dreiwege-Katalysators 22 ermittelt. Dies erfolgt analog zu dem Schritt S11 bevorzugt mittels eines oder mehrerer Kennfelder und zwar bevorzugt derart, dass durch das einmalige Reduzieren der zuzumessenden Kraftstoffmasse sich nach dem erfolgten einmaligen Reduzieren der zuzumessenden Kraftstoffmasse in dem Dreiwege-Katalysator in etwa 50 % des maximal dort speicherbaren Sauerstoffs befindet.

In einem Schritt S27 wird dann der Zähler j wieder mit dem Wert 1 initialisiert. Anschließend wird die Bearbeitung in dem Schritt S5 fortgesetzt.

## Patentansprüche

1. Verfahren zum Steuern einer Brennkraftmaschine mit einem Ansaugtrakt (1) und einem Abgastrakt (4), der einen Dreiwege-Katalysator (22) umfasst, und mit mindestens einem Zylinder (Z1 - Z4), der mit dem Ansaugtrakt (1) abhängig von der Stellung eines Gaseinlassventils (14) kommuniziert und der mit dem Abgastrakt (4) abhängig von der Stellung eines Gasauslassventils (15) kommuniziert und einen dem Zylinder (Z1 - Z4) zugeordneten Einspritzventil (19), das Kraftstoff zumisst, einer Nachkat-Sauerstoffsonde (37), die stromabwärts des Dreiwege-Katalysators (22) in dem Abgastrakt (4) angeordnet ist, bei dem
- eine zuzuführende Kraftstoffmasse (MFF) ermittelt wird, die dem jeweiligen Zylinder (Z1 - Z4) zugeführt werden soll, abhängig von einer Lastgröße,
- eine einmalig zuzumessende Kraftstoffmasse (MFF_ADD) ermittelt wird, wenn das Messsignal (MS) der Nachkat-Sauerstoffsonde (37) charakteristisch ist für mindestens einen vorgegebenen Restsauerstoffanteil, und zwar abhängig von dem Verlauf des Messsignals (MS) der Nachkat-Sauerstoffsonde (37), wobei die einmalig zuzumessende Kraftstoffmasse (MFF_ADD) abhängig von einem Gradienten (GRAD_MS) des Messsignals (MS) der Nachkat-Sauerstoffsonde (37) ermittelt wird und/oder wobei die einmalig zuzumessende Kraftstoffmasse (MFF_ADD) abhängig von einem minimalen Wert (MIN_MS) des Messsignals (MS) der Nachkat-Sauerstoffsonde (37) ermittelt wird, während das Messsignal (MS) der Nachkat-Sauerstoffsonde (37) charakteristisch ist für mindestens einen vorgegebenen Restsauerstoffanteil,
- eine korrigierte zuzuführende Kraftstoffmasse (MFF_COR) ermittelt wird abhängig von der zuzuführenden Kraftstoffmasse (MFF) und gegebenenfalls der einmalig zuzumessenden Kraftstoffmasse (MFF_ADD) und
- ein Stellsignal zum Steuern des Einspritzventils (19) erzeugt wird abhängig von der korrigierten zuzuführenden Kraftstoffmasse (MFF_COR).

2. Verfahren nach Anspruch 1,
bei dem die einmalig zuzumessende Kraftstoffmasse (MFF_ADD) ermittelt wird, wenn das Messsignal (MS) der Nachkat-Sauerstoffsonde (37) einen vorgegebenen ersten Schwellenwert (THD1) unterschreitet.

3. Verfahren nach einem der vorstehenden Ansprüche,
bei dem die einmalig zuzumessende Kraftstoffmasse (MFF_ADD), derart vorgegeben ist, dass in etwa 50 % des in dem Dreiwege-Katalysator (22) speicherbaren Sauerstoffs nach dem Zumessen der einmalig zuzumessenden Kraftstoffmasse (MFF_ADD) verbleibt.

4. Verfahren nach einem der vorstehenden Ansprüche,
bei dem die einmalig zuzumessende Kraftstoffmasse (MFF_ADD) abhängig von einem Schätzwert (OSC) der aktuellen Sauerstoff-Speicherkapazität des Dreiwege-Katalysators (22) ermittelt wird.

5. Verfahren zum Steuern einer Brennkraftmaschine mit einem Ansaugtrakt (1) und einem Abgastrakt (4), der einen Dreiwege-Katalysator (22) umfasst, und mit mindestens einem Zylinder (Z1 - Z4), der mit dem Ansaugtrakt (1) abhängig von der Stellung eines Gaseinlassventils (14) kommuniziert und der mit dem Abgastrakt (4) abhängig von der Stellung eines Gasauslassventils (15) kommuniziert und einen dem Zylinder (Z1 - Z4) zugeordneten Einspritzventil (19), das Kraftstoff zumisst, einer Nachkat-Sauerstoffsonde (37), die stromabwärts des Dreiwege-Katalysators (22) in dem Abgastrakt (4) angeordnet ist, bei dem
- eine zuzuführende Kraftstoffmasse (MFF) ermittelt wird, die dem jeweiligen Zylinder (Z1 - Z4) zugeführt werden soll, abhängig von einer Lastgröße,
- eine einmalig verringerte Kraftstoffmasse (MFF_RED) ermittelt wird, wenn das Messsignal (MS) der Nachkat-Sauerstoffsonde (37) charakteristisch ist für mindestens einen vorgegebenen Restkraftstoffanteil, und zwar abhängig von dem Verlauf des Messsignals (37) der Nachkat-Sauerstoffsonde (37), wobei die einmalig verringerte Kraftstoffmasse (MFF_RED) abhängig von einem Gradienten (GRAD_MS) des Messsignals (MS) der Nachkat-Sauerstoffsonde (37) ermittelt wird und/oder wobei die einmalig verringerte Kraftstoffmasse (MFF_RED) abhängig von einem maximalen Wert (MAX_MS) des Messsignals (MS) ermittelt wird, während das Messsignal (MS) der Nachkat-Sauerstoffsonde (37) charakteristisch ist für mindestens einen vorgegebenen Restsauerstoffanteil,
- eine korrigierte zuzuführende Kraftstoffmasse (MFF_COR) ermittelt wird abhängig von der zuzuführenden Kraftstoffmasse (MFF) und gegebenenfalls abzüglich der einmalig verringerten Kraftstoffmasse (MFF_RED) und
- ein Stellsignal zum Steuern des Einspritzventils (19) erzeugt wird abhängig von der korrigierten zuzuführenden Kraftstoffmasse (MFF_COR).

6. Verfahren nach Anspruch 5,
bei dem die einmalig verringerte Kraftstoffmasse (MFF_RED) ermittelt wird, wenn das Messsignal (MS) der Nachkat-Sauerstoffsonde (37) einen vorgegebenen zweiten Schwellenwert (THD2) überschreitet.

7. Verfahren nach einem der Ansprüche 5 oder 6,
bei dem die einmalig verringerte Kraftstoffmasse (MFF_RED) derart vorgegeben ist, dass in etwa 50 % des in dem Dreiwege-Katalysator (22) speicherbaren Sauerstoffs gespeichert ist, nachdem die Kraftstoffmasse entsprechend um die verringerte Kraftstoffmasse (MFF_RED) verringert zugemessen wurde.

8. Verfahren nach einem der Ansprüche 5 bis 7,
bei dem die einmalig verringerte Kraftstoffmasse (MFF_RED) abhängig von einem Schätzwert (OSC) der aktuellen Sauerstoff-Speicherkapazität des Dreiwege-Katalysators ermittelt wird.

9. Vorrichtung zum Steuern einer Brennkraftmaschine mit einem Ansaugtrakt (1) und einem Abgastrakt (4), der einen Dreiwege-Katalysator (22) umfasst, und mit mindestens einem Zylinder (Z1 - Z4), der mit dem Ansaugtrakt (1) abhängig von der Stellung eines Gaseinlassventils (14) kommuniziert und der mit dem Abgastrakt (4) abhängig von der Stellung eines Gasauslassventils (15) kommuniziert und einen dem Zylinder (Z1 - Z4) zugeordneten Einspritzventil (19), das Kraftstoff zumisst, einer Nachkat-Sauerstoffsonde (37), die stromabwärts des Dreiwege-Katalysators (22) in dem Abgastrakt (4) angeordnet ist, wobei die Vorrichtung Mittel aufweist, die
- eine zuzuführende Kraftstoffmasse (MFF) ermitteln, die dem jeweiligen Zylinder (Z1 - Z4) zugeführt werden soll, abhängig von einer Lastgröße,
- eine einmalig zuzumessende Kraftstoffmasse (MFF_ADD) ermitteln, wenn das Messsignal (MS) der Nachkat-Sauerstoffsonde (37) charakteristisch ist für mindestens einen vorgegebenen Restsauerstoffanteil, und zwar abhängig von dem Verlauf des Messsignals (MS) der Nachkat-Sauerstoffsonde (37), wobei das Ermitteln der einmalig zuzumessende Kraftstoffmasse (MFF_ADD) erfolgt abhängig von einem Gradienten (GRAD_MS) des Messsignals (MS) der Nachkat-Sauerstoffsonde (37) und/oder abhängig von einem minimalen Wert (MIN_MS) des Messsignals (MS) der Nachkat-Sauerstoffsonde (37), während das Messsignal (MS) der Nachkat-Sauerstoffsonde (37) charakteristisch ist für mindestens einen vorgegebenen Restsauerstoffanteil,
- eine korrigierte zuzuführende Kraftstoffmasse (MFF_COR) ermitteln abhängig von der zuzuführenden Kraftstoffmasse (MFF) und gegebenenfalls der einmalig zuzumessenden Kraftstoffmasse (MFF_ADD) und
- ein Stellsignal zum Steuern des Einspritzventils (19) erzeugen abhängig von der korrigierten zuzuführenden Kraftstoffmasse (MFF_COR).

10. Vorrichtung zum Steuern einer Brennkraftmaschine mit einem Ansaugtrakt (1) und einem Abgastrakt (4), der einen Dreiwege-Katalysator (22) umfasst, und mit mindestens einem Zylinder (Z1 - Z4), der mit dem Ansaugtrakt (1) abhängig von der Stellung eines Gaseinlassventils (14) kommuniziert und der mit dem Abgastrakt (4) abhängig von der Stellung eines Gasauslassventils (15) kommuniziert und einen dem Zylinder (Z1 - Z4) zugeordneten Einspritzventil (19), das Kraftstoff zumisst, einer Nachkat-Sauerstoffsonde (37), die stromabwärts des Dreiwege-Katalysators (22) in dem Abgastrakt (4) angeordnet ist, wobei die Vorrichtung Mittel aufweist, die
- eine zuzuführende Kraftstoffmasse (MFF) ermitteln, die dem jeweiligen Zylinder (Z1 - Z4) zugeführt werden soll, abhängig von einer Lastgröße,
- eine einmalig verringerte Kraftstoffmasse (MFF_RED) ermitteln, wenn das Messsignal (MS) der Nachkat-Sauerstoffsonde (37) charakteristisch ist für mindestens einen vorgegebenen Restkraftstoffanteil, und zwar abhängig von dem Verlauf des Messsignals (37) der Nachkat-Sauerstoffsonde (37), wobei das Ermitteln der einmalig verringerten Kraftstoffmasse (MFF_RED) erfolgt abhängig von einem Gradienten (GRAD_MS) des Messsignals (MS) der Nachkat-Sauerstoffsonde (37) und/oder abhängig von einem maximalen Wert (MAX_MS) des Messsignals (MS), während das Messsignal (MS) der Nachkat-Sauerstoffsonde (37) charakteristisch ist für mindestens einen vorgegebenen Restsauerstoffanteil,
- eine korrigierte zuzuführende Kraftstoffmasse (MFF_COR) ermitteln abhängig von der zuzuführenden Kraftstoffmasse (MFF) und gegebenenfalls abzüglich der einmalig verringerten Kraftstoffmasse (MFF_RED) und
- ein Stellsignal zum Steuern des Einspritzventils (19) erzeugen abhängig von der korrigierten zuzuführenden Kraftstoffmasse (MFF_COR).

## Claims

1. Method for controlling an internal combustion engine with an intake tract (1) and an exhaust tract (4) incorporating a three-way catalytic converter (22), and with at least one cylinder (Z1 - Z4) which communicates with the intake tract
(1) depending on the position of a gas inlet valve (14) and which communicates with the exhaust tract (4) depending on the position of a gas outlet valve (15), and an injection valve (19) assigned to the cylinder (Z1 - Z4) and which meters fuel in, a post-cat oxygen sensor (37) which is disposed downstream of the three-way catalytic converter (22) in the exhaust tract (4), wherein
- a mass of fuel to be supplied (MFF) which is to be supplied to the relevant cylinder (Z1 - Z4) is determined as a function of a load variable,
- a mass of fuel to be metered-in on a one-time basis (MFF_ADD) is determined if the measurement signal (MS) of the post-cat oxygen sensor (37) is characteristic of at least one predefined residual oxygen component, namely as a function of the response of the measurement signal (MS) of the post-cat oxygen sensor (37), the mass of fuel to be metered-in on a one-time basis (MFF_ADD) being determined as a function of a gradient (GRAD_MS) of the measurement signal (MS) of the post-cat oxygen sensor (37) and/or the mass of fuel to be metered-in on a one-time basis (MFF_ADD) being determined as a function of a minimum value (MIN_MS) of the measurement signal (MS) of the post-cat oxygen sensor (37) while the measurement signal (MS) of the post-cat oxygen sensor (37) is characteristic of at least one predefined residual oxygen component,
- a corrected mass of fuel to be supplied (MFF_COR) is determined as a function of the mass of fuel to be supplied (MFF) and possibly of the mass of fuel to be metered-in on a one-time basis (MFF_ADD) and
- an actuating signal for controlling the injection valve (19) is generated as a function of the corrected mass of fuel to be supplied (MFF_COR).

2. Method according to claim 1,
wherein the mass of fuel to be metered-in on a one-time basis (MFF_ADD) is determined if the measurement signal (MS) of the post-cat oxygen sensor (37) is below a predefined first threshold (THD1).

3. Method according to one of the preceding claims,
wherein the mass of fuel to be metered-in on a one-time basis (MFF_ADD) is predefined in such a way that approximately 50 % of the oxygen storable in the three-way catalytic converter (22) remains after the metering-in of the mass of fuel to be metered-in on a one-time basis (MFF_ADD).

4. Method according to one of the preceding claims,
wherein the mass of fuel to be metered-in on a one-time basis (MFF_ADD) is determined as a function of an estimated value (OSC) of the current oxygen storage capacity of the three-way catalytic converter (22).

5. Method controlling an internal combustion engine with an intake tract (1) and an exhaust tract (4) incorporating a three-way catalytic converter (22), and with at least one cylinder (Z1 - Z4) which communicates with the intake tract (1) depending on the position of a gas inlet valve (14) and which communicates with the exhaust tract (4) depending on the position of a gas outlet valve (15), and an injection valve (19) assigned to the cylinder (Z1 - Z4) and which meters fuel in, a post-cat oxygen sensor (37) which is disposed downstream of the three-way catalytic converter (22) in the exhaust tract (4), wherein
- a mass of fuel to be supplied (MFF) which is to be supplied to the relevant cylinder (Z1 - Z4) is determined as a function of a load variable,
- a mass of fuel reduced on a one-time basis (MFF_RED) is determined if the measurement signal (MS) of the post-cat oxygen sensor (37) is characteristic of at least one predefined residual fuel component, namely as a function of the response of the measurement signal (MS) of the post-cat oxygen sensor (37), the mass of fuel reduced on a one-time basis (MFF_RED) being determined as a function of a gradient (GRAD_MS) of the measurement signal (MS) of the post-cat oxygen sensor (37) and/or the mass of fuel reduced on a one-time basis (MFF_RED) being determined as a function of a maximum value (MAX_MS) of the measurement signal (MS) while the measurement signal (MS) of the post-cat oxygen sensor (37) is characteristic of at least one predefined residual fuel component,
- a corrected mass of fuel to be supplied (MFF_COR) is determined as a function of the mass of fuel to be supplied (MFF) and if necessary minus the mass of fuel reduced on a one-time basis (MFF_RED) and
- an actuating signal for controlling the injection valve (19) is generated as a function of the corrected mass of fuel to be supplied (MFF_COR).

6. Method according to claim 5,
wherein the mass of fuel reduced on a one-time basis (MFF_RED) is determined if the measurement signal (MS) of the post-cat oxygen sensor (37) exceeds a predefined second threshold value (THD2).

7. Method according to one of the claims 5 or 6,
wherein the mass of fuel reduced on a one-time basis (MFF_RED) is predefined such that approximately 50 % of the oxygen storable in the three-way catalytic converter (22) is stored after the mass of fuel correspondingly reduced by the reduced mass of fuel (MFF_RED) has been metered-in.

8. Method according to one of the claims 5 to 7,
wherein the mass of fuel reduced on a one-time basis (MFF_RED) is determined as a function of an estimated value (OSC) of the current oxygen storage capacity of the three-way catalytic converter.

9. Apparatus for controlling an internal combustion engine with an intake tract (1) and an exhaust tract (4) incorporating a three-way catalytic converter (22), and with at least one cylinder (Z1 - Z4) which communicates with the intake tract (1) depending on the position of a gas inlet valve (14) and which communicates with the exhaust tract (4) depending on the position of a gas outlet valve (15), and an injection valve (19) assigned to the cylinder (Z1 - Z4) and which meters fuel in, a post-cat oxygen sensor (37) which is disposed downstream of the three-way catalytic converter (22) in the exhaust tract (4), wherein the apparatus has means of
- determining, as a function of a load variable, a mass of fuel to be supplied (MFF) which is to be supplied to the relevant cylinder (Z1 - Z4),
- determining a mass of fuel to be metered-in on a one-time basis (MFF_ADD) if the measurement signal (MS) of the post-cat oxygen sensor (37) is characteristic of at least one predefined residual oxygen component, namely as a function of the response of the measurement signal (MS) of the post-cat oxygen sensor (37), the mass of fuel to be metered-in on a one-time basis (MFF_ADD) being determined as a function of a gradient (GRAD_MS) of the measurement signal (MS) of the post-cat oxygen sensor (37) and/or as a function of a minimum value (MIN_MS) of the measurement signal (MS) of the post-cat oxygen sensor (37) while the measurement signal (MS) of the post-cat oxygen sensor (37) is characteristic of at least one predefined residual oxygen component,
- determining a corrected mass of fuel to be supplied (MFF_COR) as a function of the mass of fuel to be supplied (MFF) and if necessary of the mass of fuel to be metered-in on a one-time basis (MFF_ADD) and
- generating an actuating signal for controlling the injection valve (19) as a function of the corrected mass of fuel to be supplied (MFF_COR).

10. Apparatus for controlling an internal combustion engine with an intake tract (1) and an exhaust tract (4) incorporating a three-way catalytic converter (22), and with at least one cylinder (Z1 - Z4) which communicates with the intake tract (1) depending on the position of a gas inlet valve (14) and which communicates with the exhaust tract (4) depending on the position of a gas outlet valve (15), and an injection valve (19) assigned to the cylinder (Z1 - Z4) and which meters fuel in, a post-cat oxygen sensor (37) which is disposed downstream of the three-way catalytic converter (22) in the exhaust tract (4), wherein the apparatus has means of
- determining, as a function of a load variable, a mass of fuel to be supplied (MFF) which is to be supplied to the relevant cylinder (Z1- Z4),
- determining a mass of fuel reduced on a one-time basis (MFF_RED) if the measurement signal (MS) of the post-cat oxygen sensor (37) is characteristic of at least one predefined residual fuel component, namely as a function of the response of the measurement signal (MS) of the post-cat oxygen sensor (37), the mass of fuel reduced on a one-time basis (MFF_RED) being determined as a function of a gradient (GRAD_MS) of the measurement signal (MS) of the post-cat oxygen sensor (37) and/or as a function of a maximum value (MAX_MS) of the measurement signal (MS) while the measurement signal (MS) of the post-cat oxygen sensor (37) is characteristic of at least one predefined residual oxygen component,
- determining a corrected mass of fuel to be supplied (MFF_COR) as a function of the mass of fuel to be supplied (MFF) and if necessary minus the mass of fuel reduced on a one-time basis (MFF_RED) and
- generating an actuating signal for controlling the injection valve (19) as a function of the corrected mass of fuel to be supplied (MFF_COR).

## Revendications

1. Procédé de commande d'un moteur à combustion interne avec un segment d'aspiration (1) et un segment d'échappement (4) comprenant un catalyseur trois voies (22), et avec au moins un cylindre (Z1 à Z4) qui communique avec le segment d'aspiration (1) en fonction de la position d'une soupape d'entrée de gaz (14) et qui communique avec le segment d'échappement (4) en fonction de la position d'une soupape de sortie de gaz (15), et une soupape d'injection (19) attribuée au cylindre (Z1 à Z4) et dosant du carburant, une sonde à oxygène de post-catalyseur (37) qui est disposée en aval du catalyseur trois voies (22) dans le segment d'échappement (4), dans lequel
- une masse de carburant à amener (MFF) est déterminée qui doit être amenée au cylindre (Z1 à Z4) respectif, en fonction d'une grandeur de charge,
- une masse de carburant à doser une seule fois (MFF_ADD) est déterminée lorsque le signal de mesure (MS) de la sonde à oxygène de post-catalyseur (37) est caractéristique au moins d'un taux d'oxygène résiduel prédéfini, à savoir en fonction de l'évolution du signal de mesure (MS) de la sonde à oxygène de post-catalyseur (37), dans lequel la masse de carburant à doser une seule fois (MFF_ADD) est déterminée en fonction d'un gradient (GRAD_MS) du signal de mesure (MS) de la sonde à oxygène de post-catalyseur (37), et/ou dans lequel la masse de carburant à doser une seule fois (MFF_ADD) est déterminée en fonction d'une valeur minimale (MIN_MS) du signal de mesure (MS) de la sonde à oxygène de post-catalyseur (37), alors que le signal de mesure (MS) de la sonde à oxygène de post-catalyseur (37) est caractéristique au moins d'un taux d'oxygène résiduel prédéfini,
- une masse de carburant à amener corrigée (MFF_COR) est déterminée en fonction de la masse de carburant à amener (MFF) et le cas échéant de la masse de carburant à doser une seule fois (MFF_ADD), et
- un signal de réglage pour commander la soupape d'injection (19) est généré en fonction de la masse de carburant à amener corrigée (MFF COR).

2. Procédé selon la revendication 1, dans lequel la masse de carburant à doser une seule fois (MFF_ADD) est déterminée lorsque le signal de mesure (MS) de la sonde à oxygène de post-catalyseur (37) passe sous une première valeur de seuil prédéfinie (THD1).

3. Procédé selon l'une quelconque des revendications précédentes, dans lequel la masse de carburant à doser une seule fois (MFF_ADD) est prédéfinie de telle sorte qu'il reste environ 50 % de l'oxygène pouvant être stocké dans le catalyseur trois voies (22) après le dosage de la masse de carburant à doser une seule fois (MFF_ADD).

4. Procédé selon l'une quelconque des revendications précédentes, dans lequel la masse de carburant à doser une seule fois (MFF_ADD) est déterminée en fonction d'une valeur estimée (OSC) de la capacité de stockage d'oxygène actuelle du catalyseur trois voies (22).

5. Procédé de commande d'un moteur à combustion interne avec un segment d'aspiration (1) et un segment d'échappement (4) comprenant un catalyseur trois voies (22), et avec au moins un cylindre (Z1 à Z4) qui communique avec le segment d'aspiration (1) en fonction de la position d'une soupape d'entrée de gaz (14) et qui communique avec le segment d'échappement (4) en fonction de la position d'une soupape de sortie de gaz (15), et une soupape d'injection (19) attribuée au cylindre (Z1 à Z4) et dosant du carburant, une sonde à oxygène de post-catalyseur (37) qui est disposée en aval du catalyseur trois voies (22) dans le segment d'échappement (4), dans lequel
- une masse de carburant à amener (MFF) est déterminée qui doit être amenée au cylindre (Z1 à Z4) respectif, en fonction d'une grandeur de charge,
- une masse de carburant réduite une seule fois (MFF_RED) est déterminée lorsque le signal de mesure (MS) de la sonde à oxygène de post-catalyseur (37) est caractéristique au moins d'un taux de carburant résiduel prédéfini, à savoir en fonction de la courbe du signal de mesure (MS) de la sonde à oxygène de post-catalyseur (37), dans lequel la masse de carburant réduite une seule fois (MFF_RED) est déterminée en fonction d'un gradient (GRAD_MS) du signal de mesure (MS) de la sonde à oxygène de post-catalyseur (37), et/ou dans lequel la masse de carburant réduite une seule fois (MFF_RED) est déterminée en fonction d'une valeur maximale (MAX_MS) du signal de mesure (MS), alors que le signal de mesure (MS) de la sonde à oxygène de post-catalyseur (37) est caractéristique au moins d'un taux d'oxygène résiduel prédéfini,
- une masse de carburant à amener corrigée (MFF_COR) est déterminée en fonction de la masse de carburant à amener (MFF) et le cas échéant moins la masse de carburant réduite une seule fois (MFF_RED), et
- un signal de réglage pour commander la soupape d'injection (19) est généré en fonction de la masse de carburant à amener corrigée (MFF COR).

6. Procédé selon la revendication 5, dans lequel la masse de carburant réduite une seule fois (MFF_RED) est déterminée lorsque le signal de mesure (MS) de la sonde à oxygène de post-catalyseur (37) dépasse une deuxième valeur de seuil prédéfinie (THD2).

7. Procédé selon l'une quelconque des revendications 5 ou 6, dans lequel la masse de carburant réduite une seule fois (MFF_RED) est prédéfinie de telle sorte qu'environ 50 % de l'oxygène pouvant être stocké dans le catalyseur trois voies (22) est stocké après que la masse de carburant a été dosée avec une réduction correspondant à la masse de carburant réduite (MFF_RED).

8. Procédé selon l'une quelconque des revendications 5 à 7, dans lequel la masse de carburant réduite une seule fois (MFF_RED) est déterminée en fonction d'une valeur estimée (OSC) de la capacité de stockage d'oxygène actuelle du catalyseur trois voies.

9. Dispositif de commande d'un moteur à combustion interne avec un segment d'aspiration (1) et un segment d'échappement (4) comprenant un catalyseur trois voies (22), et avec au moins un cylindre (Z1 à Z4) qui communique avec le segment d'aspiration (1) en fonction de la position d'une soupape d'entrée de gaz (14) et qui communique avec le segment d'échappement (4) en fonction de la position d'une soupape de sortie de gaz (15), et une soupape d'injection (19) attribuée au cylindre (Z1 à Z4) et dosant du carburant, une sonde à oxygène de post-catalyseur (37) qui est disposée en aval du catalyseur trois voies (22) dans le segment d'échappement (4), dans lequel le dispositif présente des moyens qui
- déterminent une masse de carburant à amener (MFF) qui doit être amenée au cylindre (Z1 à Z4) respectif, en fonction d'une grandeur de charge,
- déterminent une masse de carburant à doser une seule fois (MFF_ADD) lorsque le signal de mesure (MS) de la sonde à oxygène de post-catalyseur (37) est caractéristique au moins d'un taux d'oxygène résiduel prédéfini, à savoir en fonction de l'évolution du signal de mesure (MS) de la sonde à oxygène de post-catalyseur (37), dans lequel la masse de carburant à doser une seule fois (MFF_ADD) est déterminée en fonction d'un gradient (GRAD_MS) du signal de mesure (MS) de la sonde à oxygène de post-catalyseur (37), et/ou en fonction d'une valeur minimale (MIN_MS) du signal de mesure (MS) de la sonde à oxygène de post-catalyseur (37), alors que le signal de mesure (MS) de la sonde à oxygène de post-catalyseur (37) est caractéristique au moins d'un taux d'oxygène résiduel prédéfini,
- déterminent une masse de carburant à amener corrigée (MFF_COR) en fonction de la masse de carburant à amener (MFF) et le cas échéant de la masse de carburant à doser une seule fois (MFF_ADD), et
- génèrent un signal de réglage pour commander la soupape d'injection (19) en fonction de la masse de carburant à amener corrigée (MFF_COR).

10. Dispositif de commande d'un moteur à combustion interne avec un segment d'aspiration (1) et un segment d'échappement (4) comprenant un catalyseur trois voies (22), et avec au moins un cylindre (Z1 à Z4) qui communique avec le segment d'aspiration (1) en fonction de la position d'une soupape d'entrée de gaz (14) et qui communique avec le segment d'échappement (4) en fonction de la position d'une soupape de sortie de gaz (15) et une soupape d'injection (19) attribuée au cylindre (Z1 à Z4) et dosant du carburant, une sonde à oxygène de post-catalyseur (37) qui est disposée en aval du catalyseur trois voies (22) dans le segment d'échappement (4), dans lequel le dispositif présente des moyens qui
- déterminent une masse de carburant à amener (MFF) qui doit être amenée au cylindre (Z1 à Z4) respectif, en fonction d'une grandeur de charge,
- déterminent une masse de carburant réduite une seule fois (MFF_RED) lorsque le signal de mesure (MS) de la sonde à oxygène de post-catalyseur (37) est caractéristique au moins d'un taux de carburant résiduel prédéfini, à savoir en fonction de l'évolution du signal de mesure (MS) de la sonde à oxygène de post-catalyseur (37), dans lequel la détermination de la masse de carburant réduite une seule fois (MFF_RED) s'effectue en fonction d'un gradient (GRAD_MS) du signal de mesure (MS) de la sonde à oxygène de post-catalyseur (37), et/ou en fonction d'une valeur maximale (MAX_MS) du signal de mesure (MS), alors que le signal de mesure (MS) de la sonde à oxygène de post-catalyseur (37) est caractéristique au moins d'un taux d'oxygène résiduel prédéfini,
- déterminent une masse de carburant à amener corrigée (MFF_COR) en fonction de la masse de carburant à amener (MFF) et le cas échéant moins la masse de carburant réduite une seule fois (MFF_RED), et
- génèrent un signal de réglage pour commander la soupape d'injection (19) en fonction de la masse de carburant à amener corrigée (MFF_COR).
